# EUROPEAN PATENT APPLICATION

(11) **EP 3 446 811 A1**
(43) Date of publication of application: **27.02.2019**
(21) Application number: 18185017.3
(22) Date of filing: 23.07.2018
(51) Int. Cl.: B22F 3/105, B22F 5/10, B22F 7/00, B23K 15/00, B33Y 80/00, B33Y 10/00, B33Y 30/00, B23K 26/342, B29C 64/153

(54) **POROUS STRUCTURES**

(30) Priority: 21.08.2017 GB 201713360
(71) Applicant: Rolls-Royce plc, London SW1E 6AT (GB)
(72) Inventor: Norton, Andrew D, Derby, Derbyshire DE24 8BJ (GB); Attallah, Moataz M, Derby, Derbyshire DE24 8BJ (GB); Essa, Khamis E, Derby, Derbyshire DE24 8BJ (GB); Li, Sheng, Derby, Derbyshire DE24 8BJ (GB)
(74) Representative: Rolls-Royce plc

(57) **Abstract**

Method of forming porous structures which are permeable in two or more dimensions. The method comprises forming successive layers of material on top of one another and, for each layer, selectively fusing powdered material according to a geometry having voids to be permeable in one or more dimensions at an energy density which is sufficient to only fully fuse a portion of said material to create additional permeability.

## Description

### TECHNICAL FIELD

This disclosure relates to porous structures and methods of forming them.

### BACKGROUND

Porous structures may be utilised for various purposes, such as filtration, sound absorption, shock reduction, catalysis, medical implants, and for weight saving. Porous structures may also form the basis of heat pipes, in which a working fluid moves from a cold to a hot location through a porous wick *via* capillary action, whereupon it evaporates and returns to the cold location.

In each of these cases, it is necessary to carefully control the poromechanics of the structures so as to achieve the desired effect.

### SUMMARY

The present invention is directed towards methods and apparatus for forming porous structures which are permeable in two or more dimensions.

In one method, successive layers of a metal or alloy material are formed on top of one another. The method includes, for each layer, selectively fusing powdered material according to a geometry, said geometry defining voids such that it is permeable in one or more dimensions. The powdered material is fused at an energy density which is sufficient to only fully fuse a portion of the material. This creates additional permeability.

Apparatus is also provided which implements this method.

### BRIEF DESCRIPTION OF THE DRAWINGS

Embodiments will now be described by way of example only with reference to the accompanying drawings, which are purely schematic and not to scale, and in which:
Figure 1 shows an apparatus for forming porous structures which are permeable in two or more dimensions;
Figure 2 shows a porous structure in plan view;
Figures 3A and 3B are, respectively, a section of the porous structure along A-A and B-B of Figure 2;
Figures 4A and 4B show alternative porous structures;
Figure 5 shows a controller forming part of the apparatus of Figure 1;
Figure 6 shows a mapping of instructions and data in memory in the controller of Figure 5;
Figure 7 details operations carried out by the controller of Figure 5;
Figure 8 details operations conducted by a system control module in the controller of Figure 5;
Figures 9A and 9B detail two alternative ways of creating additional permeability in the porous structure of Figure 2; and
Figure 10 shows the function for performing fusion and/or erosion.

### DETAILED DESCRIPTION

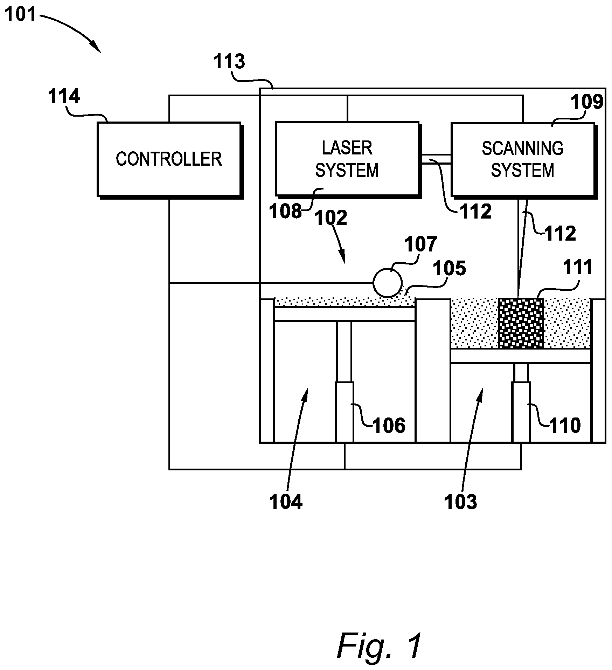

An apparatus 101 for forming porous structures which are permeable in two or more dimensions is shown in Figure 1.

The apparatus 101 is similar in configuration to existing additive manufacturing systems. Briefly, therefore, it comprises a powder delivery system 102 configured to deliver powdered material to a powder bed 103. The powder delivery system 102 comprises a powder hopper 104 to store a powered material 105, which in this embodiment is a metal powder. In the embodiment discussed herein, the metal powder is a nickel-base superalloy. Specifically, the nickel-base superalloy is Inconel 718. Other nickel-base superalloys such as Inconel 625, CM247LC, CMSX486, or otherwise may be used. Alternatively, the metal powder could be an aluminium alloy such as AlSi10Mg or otherwise, a titanium alloy such as Ti6AI4V or similar, or another other metal or another alloy.

In the present example, the powdered material is gas atomised, however other methods of powder atomisation or indeed any other method of forming powdered material may be used. In the present example, the powdered material has maximum dimension of about 15 to 53 micrometres, although it will be appreciated that other powder fineness may be used.

The powder hopper 104 includes a piston 106 to raise the base of the hopper 104. The powder delivery system 102 further comprises a roller 107 which delivers raised power to the powder bed 103. The powder bed 103 contains powdered material 105 which is selectively fused by a powder fusion system, which in this example comprises an energy source in the form of a laser system 108, and a scanning system 109. A piston 110 lowers the base of the powder bed 103 to allow a porous structure 111 to be built up on a layer-by-layer basis. In the present embodiment, each layer is 20 micrometres thick. However, other thicknesses, such as up to around 100 micrometres, or any other thickness, may be chosen depending upon the required resolution, amongst other considerations.

It is envisaged that the apparatus 101 may be used to form a porous structure 111 which is a wick for a heat pipe (which may be a loop heat pipe), a component part of a heat exchanger, a filter for gas, a filter for liquid, or an acoustic panel. However, it will be appreciated that other types of porous structures may be produced by embodiments of the methods and apparatuses of the present invention.

In the present embodiment, the laser system 108 operates to produce a laser beam 112, which is focussed and scanned over the powder bed 103 by the scanning system 109. In this embodiment, the laser system 108 is a fibre laser, and in a specific embodiment is an ytterbium fibre laser. In this embodiment the scanning system 109 comprises a moveable mirror system to allow scanning of the laser beam 112 in two dimensions. In the specific embodiment illustrated in Figure 1, the powder delivery system, powder bed and powder fusion system are maintained in an inert environment 113, such as a high vacuum, argon or equivalent.

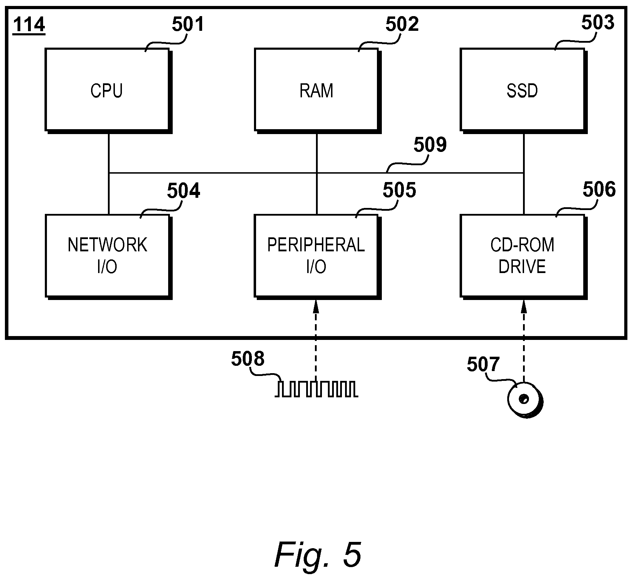

The co-ordination of the pistons 106 and 110 and to roller 107 is performed in a conventional manner by a controller 114. The controller 113 also controls the operation of, in the powder fusion system, namely, in this embodiment, the laser system 108 and the scanning system 109. Controller 114 will be described in further detail with reference to Figure 5.

In the present embodiment, the apparatus 101 is operative to perform laser powder bed fusion. In the present embodiment, the apparatus 101 fuses the powdered material 105 by melting it. This is achieved in this specific embodiment by use of the laser system 108 to perform selective laser melting of the powdered material 105. In an alternative embodiment, the apparatus 101 operates to selectively sinter the powdered material 105. In this case, the powdered material is fused by sintering it.

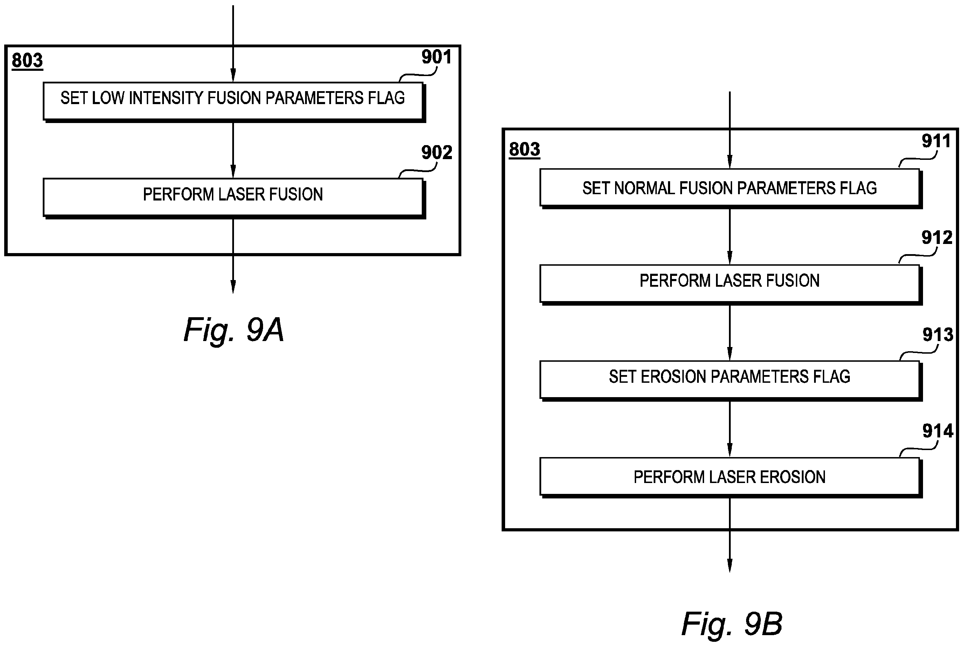

As will be described further with reference, to Figures 9A, the apparatus 101 may operate to fuse the powdered material 105 at a lower energy density than would be required to form a solid article with zero or near-zero porosity. This is because the fusion of the powdered material 105 is a stochastic process, and thus at lower energy densities, some, but not all of the powered material fuses.

Alternatively, the apparatus 101 may operate to fuse the powdered material 105 at an energy density which forms a substantially solid article with zero or near-zero porosity, followed by a process of erosion in which the energy source, in this example the laser system 108, is operated at an energy density which results in the erosion of material and thereby increases porosity. Material may be eliminated by ablation due to elevated temperature.

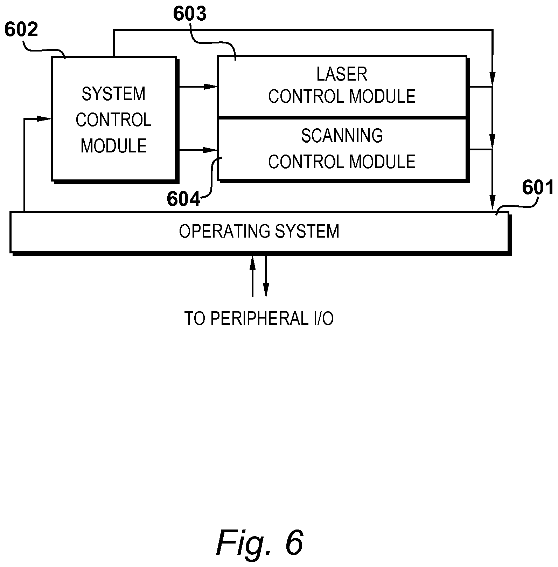

Steps carried out by the controller 114 to control the powder fusion system will be described further with reference to Figures 6 to 10.

In an alternative embodiment, the powder fusion system may instead be an electron beam melting system. Thus, instead of the laser beam 112 fusing (melting, sintering, or otherwise) the powdered material 105 or eroding fused material, an electron beam produced by electron source is used.

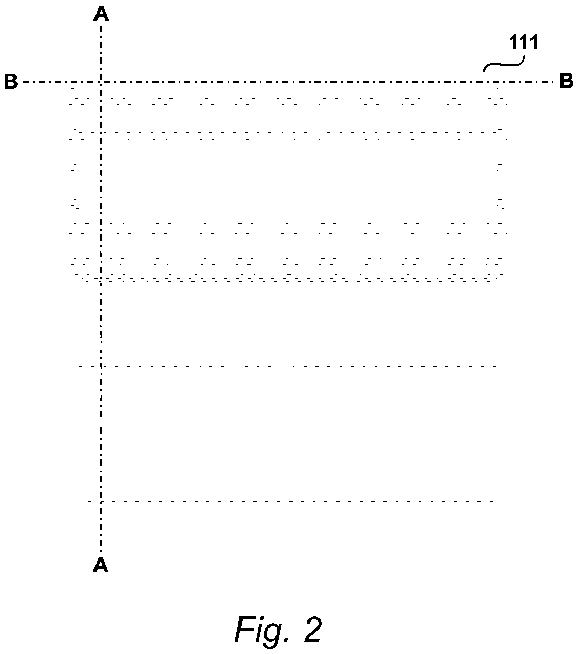

The porous structure 111 is shown in plan view in Figure 2 following completion thereof by apparatus 101.

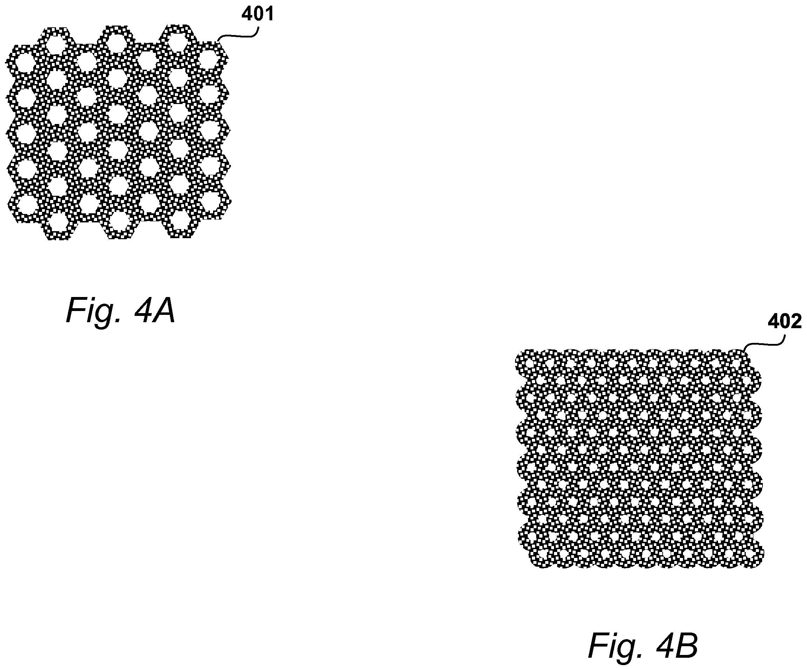

It will be seen that the porous structure 111 has two sources of porosity. The first source of porosity is that the scanning system 109 directed the laser beam 112 over the powdered material 105 according to a geometry that has voids in one or more dimensions. In this example, the geometry is in the form of a mesh, which in this case specifically is a grid such that voids of square section are formed. The geometry may take different forms, as will be described further with reference to Figures 4A and 4B.

The second source of porosity is due to the mode of operation of the powder fusion system and the energy densities of the energy source that formed the porous structure 111. As described previously, either a low-energy-density fusion process may result in additional permeability, or a high-energy-density erosion process may result in additional permeability depending upon the parameters chosen for creation of the porous structure 111.

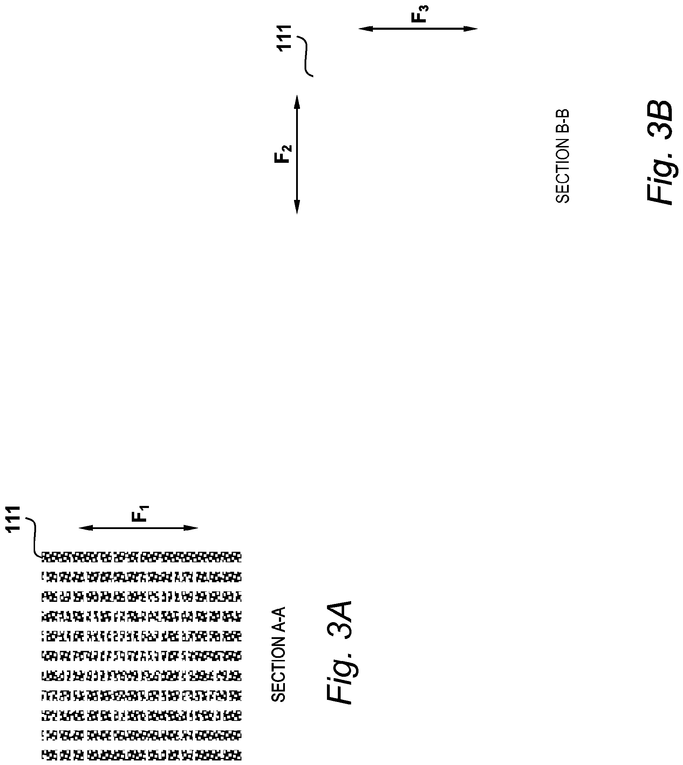

A section along A-A of Figure 2 is shown in Figure 3A. As the porous structure 111 is built up layer-by layer, the gaps in the grid form one-dimensional voids. In a specific example in which the porous structure 111 is to form the wick in a heat pipe, this may encourage preferential fluid flow in the direction of arrow F₁. In an alternative example in which the porous structure 111 is to form a vehicle exhaust gas catalyser body, this may result in lower back-pressure by permitting preferential flow in the direction of arrow F₁.

A section along B-B of Figure 2 is shown in Figure 3B. The result of the creation of additional permeability by either low energy density fusion or high energy density erosion is that pore networks open up within the porous structure to create permeability in dimensions over and above that or those defined by the geometry by which the powder fusion system formed the porous structure 111, shown by arrows F₂ and F₃. By varying the porosity formed by the geometry of the layers and the porosity formed by the parameters chosen for creation of the porous structure 111, its poromechanics may be controlled.

Thus, referring to the specific example in which the porous structure 111 is to form the wick in a heat pipe, this may encourage a more even distribution of working fluid throughout the wick, increasing the efficiency of the heat pipe. Referring to the alternative example in which the porous structure 111 is to form a vehicle exhaust gas catalyser body, the pore networks may provide increased surface area for operation of the catalyst.

Thus it will be understood that the combination of the voids in the geometry of the layers formed by the powder fusion system, and the additional permeability formed by control of the fusion and optionally erosion parameters, allows the embodiments of the methods and apparatuses of the present invention to form porous structures that are permeable in two or more dimensions.

A plan view of a porous structure 401 formed by use of a different geometry is shown in Figure 4A. The geometry of porous structure 401 is a honeycomb. Porous structure 401 may find application as a structural element and may assist efforts to save weight. It may also find application as part of a crash structure, for example.

A plan view of a porous structure 402 formed by use of another different geometry is shown in Figure 4B. The geometry of porous structure 401 is a mesh, in particular a mesh comprising a plurality of interlinked circles. Porous structure 402 may find application in a gas or liquid filtration system.

Other geometries are possible. Indeed, it is envisaged that voids may be present in more than one dimension, for example two dimensions, such that, for example, fluid flow may be encouraged in any required direction.

It will therefore be appreciated that the geometry of each layer formed by the powder fusion system may be of any form, so long as there exists voids in one or more dimensions. In the embodiments shown in Figures 2, 3A, 3B, 4A and 4B, the layers are shown as having the same geometry. It is envisaged, however, that in alternative implementation the geometry may change from layer to layer. This will allow the porous structure to have one or more of an irregular overall shape, and have voids which change in shape.

Controller 114 is shown in greater detail in Figure 4. In the present example, the controller 114 takes the form of a personal computer (PC).

Controller 114 comprises a processor such as a central processing unit (CPU) 501. In this instance, central processing unit 401 is a single Intel (RTM) Core i7 processor, having four on-die processing cores operating at 3.2 gigahertz. It is possible that other processor configurations could be provided, having more or fewer cores. Further, a multi-socket arrangement comprising two or more such processors could be used to provide a high degree of parallelism in the execution of instructions.

Memory is provided by random access memory (RAM) 502, which in this example is DDR4 SDRAM totalling 8 gigabytes in capacity. Other capacities are possible. RAM 402 allows storage of frequently-used instructions and data structures by controller 114.

Non-volatile storage is provided by a storage device such a solid-state disk (SSD) 503, which in this instance has a capacity of 256 gigabytes. Other capacities are possible. SSD 503 stores an operating system and application data. In an alternative embodiment, the storage device could be a mechanical hard disk drive. In an alternative embodiment, a plurality of storage devices provided and configured as a RAID array to improve data access times and/or redundancy.

A network interface 504 facilitates communication with a packet-based network such as a local area network. Additionally, peripheral interfaces 505 are provided. In this embodiment, the peripheral interfaces 505 comprise RS232 serial interfaces to connect the controller 114 to the other parts of apparatus 101 to allow control thereof. The peripheral interfaces 505 further comprises Universal Serial Bus interfaces to facilitate connection of human interface devices to the controller 114, along with a VGA interface to allow connection of a display to controller 114.

Whilst the peripheral interface 505 in the present embodiment comprises an RS232 serial interface, a Universal Serial Bus interface, and a VGA interface, other peripheral interface types such as a parallel interface and/or IEEE 1394 High Speed Serial Bus may be used. Alternatively, one or more wireless interfaces such as a member of the IEEE 802.11x family of standards and/or Bluetooth (RTM) could be used.

Controller 114 further comprises an optical drive, such as a CD-ROM drive 506, into which a non-transitory computer readable medium such as an optical disk, e.g. CD-ROM 507 can be inserted. CD-ROM 507 comprises computer-readable instructions which, in this example, facilitate implementation of the methods of the present invention by the apparatus 101.

The instructions are, in use, installed on solid-state disk 503, loaded into RAM 502 and then executed by CPU 501. Alternatively, the instructions may be downloaded from a network attached storage device via the network interface 504 as packet data 508.

Communication between the components within controller 114 is facilitated by a bus 509.

It is to be appreciated that the above system is merely an example of a configuration of system that can fulfil the role of controller 305. Any other system having a processing device, memory, a storage device and a peripheral interface to communicate with the rest of the components in apparatus 101 could be used. Thus in an alternative embodiment it is envisaged that an application-specific integrated circuit (ASIC) could be produced or a field-programmable gate array (FPGA) could be configured such that they perform the same operations as the controller 114.

A mapping of instructions and data in memory in controller 114 is shown in Figure 6.

An operating system 601 communicates via a hardware abstraction layer with the hardware components of the controller 114 and peripherals attached thereto, as identified in Figure 5. In the present example, the operating system 601 is an NT-based operating system, such as Microsoft (RTM) Windows (RTM) 10. Other operating systems suitable for use on controller 114 could be used. In the present example any that are IBM (RTM) PC compatible could be chosen.

A system control module 602 is provided which communicates with a laser system control module 603 and a scanning system control module 604.

In the present embodiment, the laser system control module 603 and scanning system control module 604 comprise device drivers which provide an interface to allow control of the physical laser system 108 and scanning system 109.

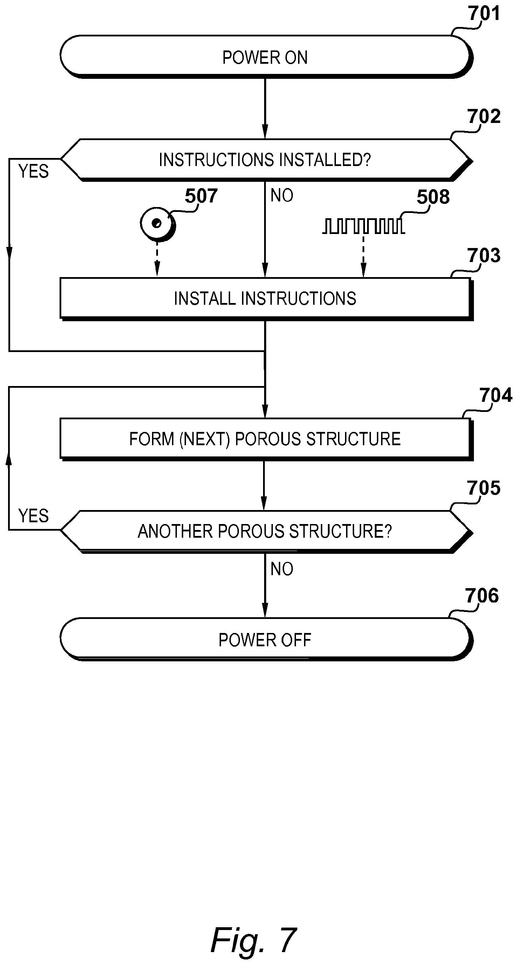

In operation, an instruction will be received from an operator of the controller 114 to commence production of a porous structure by apparatus 101. The operating system 601 will pass this instruction to the system control module 602, which will co-ordinate the production of the porous structure. The operations carried out by system control module 602 will be described further with reference to Figures 7 to 10.

In alternative embodiments, particularly those in which the controller 114 is instead implemented by specialised hardware such as an ASIC or FPGA, there may be not be an operating system, and the mapping of the modules shown in Figure 6 may instead only be considered as an abstract representation of the functional modules implemented in hardware.

Operations carried out by the controller 114 in the present embodiment are set out in Figure 7.

The controller 114 is powered on at step 701, and at step 702 a question is asked as to whether the instructions for the system control module 602 have been installed. If not, then the instructions are installed at step 703 either from CD-ROM 507 or downloaded as packet data 508 as previously described.

Next, or if the instructions have previously been installed, a system control module 602 executes and a porous structure is formed at step 704. A question is then asked at step 705 as to whether another porous structure needs to be formed. If so, then control returns to step 704 where then next porous structure is formed. If not, then the controller 114 is powered off at step 706.

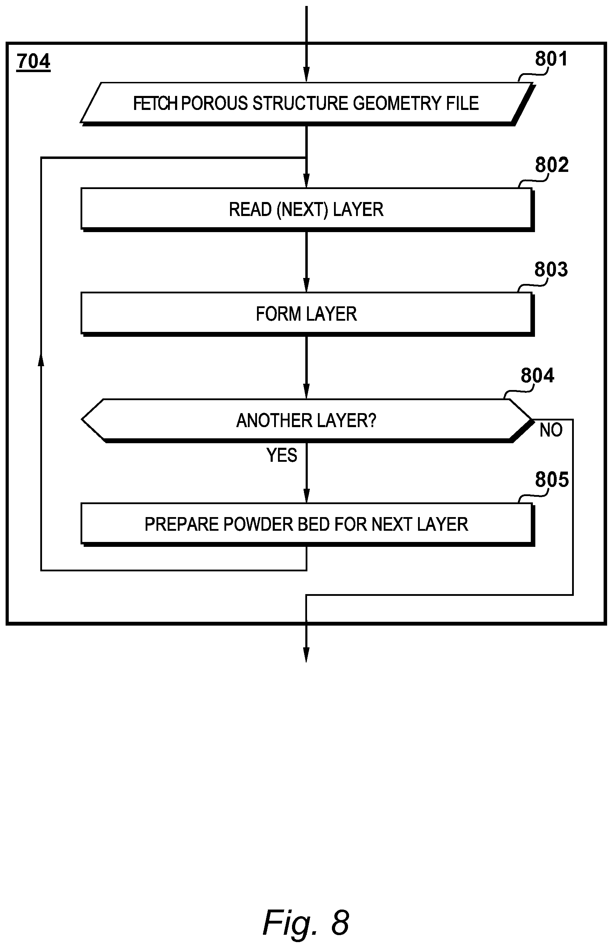

Operations conducted by the system control module 602 in the present embodiment during step 704 are set out in Figure 8.

At step 801, the file defining the geometry for the layers of the porous structure is fetched. In the present example, the file is an STL file format file. Alternatively, the file may be an AMF file format file, or any other file suitable for defining the geometry. Depending upon the file format, step 801 may involve a process of slicing the geometry for the porous structure and preparing G-code or similar defining the path to be scanned by the scanning system. Alternatively, the file fetched in step 801 may comprise previously generated G-code.

At step 802, the first layer is read. The layer is then formed at step 803, which will be described further with reference to Figures 9A and 9B. A question is then asked at step 804 as to whether there is another layer in the file. If so, then system control module 602 prepares the powder bed for the next layer at step 805 by lowering piston 110, raising piston 106, and using roller 107 to move a new layer of powdered material 105 from the powder hopper 102 into the powder bed 103.

Eventually, all layers will be formed and the question asked at step 804 will be answered in the negative. Step 704 is then complete.

As previously described, in one embodiment of the present invention powder fusion may be carried out at a low energy density to only partially melt or sinter the powdered material 105, therefore creating the additional permeability over and above that provided by the voids in the geometry of each layer. In another embodiment, powder fusion may be carried out to generate the layer with zero or near-zero porosity, followed by an erosion process to create the additional permeability.

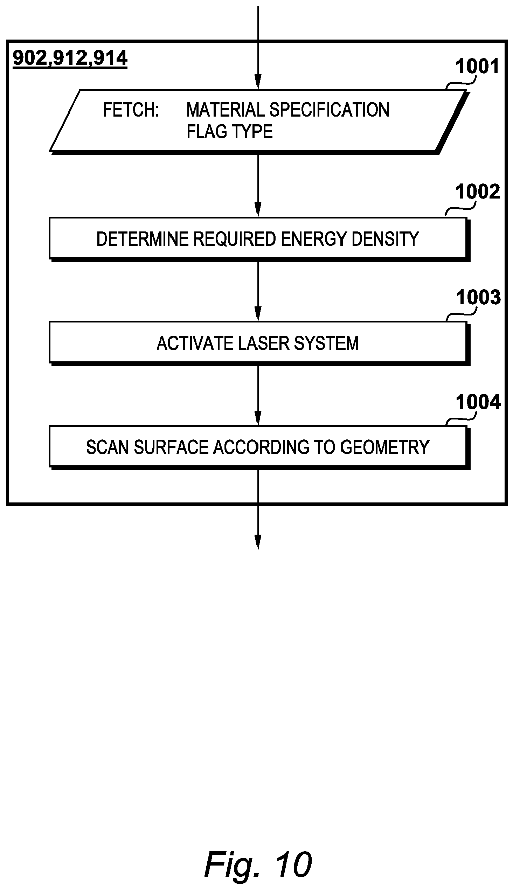

Figure 9A details step 803 when the first method is to be carried out. At step 901, a flag is set to the effect that a low energy density fusion process is to be carried out. Control proceeds to step 902 where the laser fusion process is carried out. Operations to perform step 902, taking into account the flag set at step 901, will be described with reference to Figure 10.

Figure 9B details step 803 when the second method is to be carried out. At step 911, a flag is set to the effect that a normal energy density fusion process is to be carried out. Control proceeds to step 912 where the laser fusion process is carried out. At step 913, a flag is set to the effect that an erosion process is to be carried out. Control proceeds to step 914 where the laser erosion process is carried out. Operations carried out to perform steps 912 and 914, taking into account the flags set at step 911 and 913, will be described with reference to Figure 10.

The function of the present embodiment to perform laser fusion or laser erosion at either step 902, 912, or 914, is shown in Figure 10.

The function begins at step 1001 by fetching the material specification, and the flag type set prior to the function being called. This facilitates the determination at step 1002 of the required energy density achieve the desired process outcome. The volumetric energy density of the energy source, which in this example is the laser system 108 and scanning system 109, is a function of laser power, scan spacing, scanning speed, and layer thickness. It has units of joules per cubic millimetre. (Areal energy density is a function of laser power, scan spacing, and scanning speed. It has units of joules per square millimetre.)

It can be shown that below a certain energy density, full consolidation of material does not occur. It has been found for a number of nickel-base superalloys, including CM247LC, CMSX486, Inconel 625, and Inconel 718, that full consolidation of powdered material occurs as the energy density is increased past about 85 joules per cubic millimetre. Thus, for a desired layer thickness of, for example, 20 micrometres, the areal energy density would be 1.7 joules per square millimetre.

Erosion of such powdered material occurs at higher energy densities, typically around two to three orders of magnitude higher. Thus, in the present embodiment, details of the powdered material and the flag set is used to determine the required energy density.

In an example, the material is a nickel-base superalloy and the material is to be fused at step 902 following the setting of the low energy density flag at step 901. In such an example, the volumetric energy density is set during step 1002 to between 15 to 70 joules per cubic millimetre, i.e. below the density at which full consolidation occurs. In this way, only a portion of the powdered material will melt, resulting in additional porosity in the layer over and above that inherent in the layer geometry.

In another example, the material is a nickel-base superalloy and the material is to be fused at step 912 following the setting of the normal energy density flag at step 911. In such an example, the energy density is set during step 1002 to 100 joules per cubic millimetre to achieve full consolidation of the powder, thereby resulting in zero or near-zero porosity.

In another example, the material is a nickel-base superalloy and the material is to be eroded at step 914 following the setting of the erosion flag at step 913. In such an example, the energy density is set during step 1002 to between 1500 to 10000 joules per cubic millimetre.

Following determination of the required energy density, the laser system is activated at step 1003 by the control system module 602 by means of the laser control module 603. The laser is operated at the requisite power to provide the required energy density. Then, at step 1004, the control system module 602 *via* the scanning control module 603 moves the laser beam 112 to fuse powdered material (or erode fused material) to achieve the current layer's required geometry. In the present example, step 1004 includes a process of raster scanning the laser beam 112 to fill in the geometry of the layer being formed. The line spacing in the raster scan and the rate at which it occurs is set to, when combined with the laser power, produce the required energy density determined at step 1002.

## Claims

1. A method of forming a porous structure which is permeable in two or more dimensions, the method comprising forming successive layers of a metal or alloy material on top of one another, including, for each layer:
selectively fusing powdered material according to a geometry, said geometry defining voids such that it is permeable in one or more dimensions, wherein said fusing is performed at an energy density which is sufficient to only fully fuse a portion of said material to thereby create additional permeability.

2. The method of claim 1, in which the material is selectively fused by one of:
a laser melting process;
a laser sintering process;
an electron beam melting process.

3. The method of any preceding claim, in which the material comprises one of:
aluminium;
titanium;
a nickel-base superalloy.

4. The method of any preceding claim, in which the geometry of each layer is the same.

5. The method of any preceding claim, in which the geometry of a layer is one of:
a mesh;
a grid;
a honeycomb.

6. The method of any preceding claim, in which the porous structure is one of:
a wick for a heat pipe;
a component part of a heat exchanger;
a filter for gas;
a filter for liquid;
an acoustic panel.

7. The method of claim 1, wherein:
the material is a nickel-base superalloy;
the material is selectively fused by a laser melting process; and
the energy density at which material is selectively fused is 15 to 70 joules per cubic millimetre.

8. Apparatus for forming a porous structure which is permeable in two or more dimensions, comprising:
a powder delivery system configured to deliver powdered metal or alloy material to a powder bed;
a powder fusion system including an energy source; and
a control system configured to selectively fuse powdered material on the powder bed with the energy source according to a geometry, said geometry defining voids such that it is permeable in one or more dimensions, and wherein the energy density of the energy source is sufficient to only fully fuse a portion of said material to thereby create additional permeability.

9. The apparatus of claim 8, in which the powder fusion system is one of:
a laser melting system;
a laser sintering system;
an electron beam melting system.

10. The apparatus of claim 8 or claim 9, in which the material comprises one of:
aluminium, or an alloy thereof;
titanium, or an alloy thereof;
a nickel-base superalloy.

11. The apparatus of any one of claims 8 to 10, in which the geometry of each layer is the same.

12. The apparatus of any one of claims 8 to 11, in which the geometry of a layer is:
a mesh;
a grid;
a honeycomb.

13. The apparatus of any one of claims 8 to 12, in which the porous structure is one of:
a wick for a heat pipe;
a component part of a heat exchanger;
a filter for gas;
a filter for liquid;
an acoustic panel.
